(19) Europäisches Patentamt
European Patent Office
Office européen des brevets

(11) **EP 4 067 863 B1**

(12) **EUROPÄISCHE PATENTSCHRIFT**

(45) Veröffentlichungstag und Bekanntmachung des Hinweises auf die Patenterteilung:
**20.11.2024   Patentblatt 2024/47**

(21) Anmeldenummer: **22163168.2**

(22) Anmeldetag: **21.03.2022**

(51) Internationale Patentklassifikation (IPC):
**G01N 9/24** (2006.01)

(52) Gemeinsame Patentklassifikation (CPC):
**G01N 9/24**

(54) **VERFAHREN ZUM KALIBRIEREN EINER RADIOMETRISCHEN DICHTE-MESSVORRICHTUNG**

METHOD FOR CALIBRATING A RADIOMETRIC DENSITY MEASURING DEVICE

PROCÉDÉ D'ÉTALONNAGE D'UN DISPOSITIF DE MESURE RADIOMÉTRIQUE DE DENSITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2021   DE 102021108307**

(43) Veröffentlichungstag der Anmeldung:
**05.10.2022   Patentblatt 2022/40**

(73) Patentinhaber: **Endress+Hauser SE+Co. KG 79689 Maulburg (DE)**

(72) Erfinder:
- **Iyer, Arun Shankar Venkatesh 79541 Lörrach (DE)**
- **Nzitchieu Gadeu, Narcisse Michel 79689 Maulburg (DE)**
- **Weidenbruch, Simon 79541 Lörrach (DE)**
- **Lange, Jörn 79650 Schopfheim (DE)**
- **Eumann, Sebastian 13189 Berlin (DE)**

(74) Vertreter: **Koslowski, Christine Adelheid Endress+Hauser Group Services (Deutschland) AG+Co. KG Colmarer Straße 6 79576 Weil am Rhein (DE)**

(56) Entgegenhaltungen:
WO-A1-97/29356          CA-A1- 2 992 330
DE-A1- 102017 130 534

**Beschreibung**

Die Erfindung betrifft ein Verfahren zum Kalibrieren einer radiometrischen Vorrichtung zur Bestimmung und/oder Überwachung der Dichte eines in einem Behälter befindlichen Mediums, wobei eine Sendeeinheit und eine Empfangseinheit vorgesehen sind, wobei die Sendeeinheit radioaktive Strahlung einer vorgegebenen Intensität aussendet und wobei die Empfangseinheit die von der Sendeeinheit ausgesendete radioaktive Strahlung nach Durchgang durch das Medium empfängt, und wobei eine Regel-/Auswerteeinheit vorgesehen ist, die anhand der von der Empfangseinheit ermittelten Messwerte die Dichte des in dem Behälter befindlichen Mediums bestimmt.

Radiometrische Füllstands- oder Dichtemessungen kommen immer dann zum Einsatz, wenn die üblicherweise genutzten Messverfahren versagen bzw. nicht mehr anwendbar sind. Radiometrische Dichtemessungen werden beispielsweise im Herstellungsprozess von Aluminium aus Bauxit eingesetzt und bei der Messung der Dichte von Schlämmen, die üblicherweise mit Gesteinsbrocken durchsetzt sind, im Rahmen von Baggerarbeiten in Meer oder Fluss. Oftmals erfolgt die radiometrische Dichtemessung in Verbindung mit einer Durchflussmessung.

Bei der radiometrischen Dichtemessung wird das in einem Behälter (Tank, Silo, Rohrleitung, usw.) befindliche Medium üblicherweise von Gammastrahlung durchstrahlt. Die Strahlung geht von einer Gammaquelle aus und wird von einer Empfangseinheit (Szintillator) detektiert, die so positioniert ist, dass sie die von der Sendeeinheit ausgesandte Gammastrahlung nach Durchgang durch das Medium detektiert. Als Gammaquelle kommen je nach Anwendungsfall beispielsweise Cs137 oder Co60 -Quellen zum Einsatz. Die Empfangseinheit besteht entweder aus Kunststoff oder aus einem Kristall, einem Photomultiplier und Empfangselementen.

Die von der Sendeeinheit ausgesendete Gammastrahlung wird bei Durchgang durch das Medium und/oder den Behälter zumindest geschwächt bzw. gedämpft. Die Schwächung bzw. die Dämpfung der Gammastrahlung zeigt eine funktionale Abhängigkeit von der Dichte des Mediums, das sich in dem Behälter befindet. Die geschwächte bzw. gedämpfte Gammastrahlung trifft auf das Detektormaterial der Detektoreinheit und wird dort in Lichtimpulse transformiert, die von einem Detektor, z.B. einer Photodiode, detektiert werden. Zur Bestimmung der Dichte wird die Anzahl der Lichtimpulse gezählt, die die Gammastrahlung bei Auftreffen auf das Detektormaterial erzeugt.

Die Dämpfung $F_D$ der Gammastrahlung bei Durchgang durch das Medium lässt sich über das Lambert-Beersche Gesetz beschreiben:

$$F_D = N/N_0 = e^{-\mu i \cdot D}$$

Hierbei ist $\mu i$ der lineare Dämpfungskoeffizient und D der Strahlweg. Der Strahlweg entspricht z.B. bei einer Rohrleitung mit aufgeschnalltem radiometrischem Dichtemessgerät dem Innendurchmesser der Rohrleitung, vergrößert um den zweifachen Wert der Dicke der Wandung des Behälters. Ist der Innendurchmesser der Rohrleitung viel größer als die Dicke der Wandung der Rohrleitung, so kann die Schwächung bzw. Dämpfung der Gammastrahlung durch das Material der Wandung der Rohrleitung vernachlässigt werden. Alternativ lässt sich die Schwächung der Gammastrahlung durch die Wandung des Behälters experimentell bei leerem Behälter bestimmen. Aufgrund der hohen am Detektor eintreffenden Strahlung ist dieser Weg in der Praxis problematisch. Ebenso ist es möglich, die Schwächung der Gammastrahlung bei Durchgang durch das Material der Wandung des Behälters zu berechnen.

Der lineare Dämpfungskoeffizient ist abhängig von der Energie der einfallenden Gammastrahlung, der chemischen Zusammensetzung des durchstrahlten Mediums und der Dichte des Mediums. Über die Einführung der Massendämpfungskonstanten $\mu$, die aus dem linearen Dämpfungskoeffizienten $\mu i$ abgeleitet ist, lässt sich die Abhängigkeit der Dämpfung der Gammastrahlung von den Eigenschaften des Mediums nahezu gänzlich eliminieren. Unter idealen Bedingungen ist der Massedämpfungskoeffizient unabhängig von der Dichte und der Beschaffenheit des Mediums und somit nur abhängig von der Energie der einfallenden Gammastrahlung. Erklären lässt sich diese Tatsache dadurch, dass die bei der Dichtemessung verwendete Gammastrahlung in einem Energiebereich von 0.5 bis 0.6 MeV liegt. In diesem Energiebereich ist der Compton-Effekt, also die inelastische Streuung von Photonen an den Elektronen des streuenden Mediums, der dominante Effekt. Folglich ist die Massendämpfungskonstante $\mu$ bei gleichbleibender Energie der eingestrahlten und mit dem Medium wechselwirkenden Photonen eine Konstante. Somit ist $\mu = \mu i/p$ und $N = N_0 \, e^{-\mu \cdot \rho \cdot D}$. Damit ergibt sich:

$$-\ln(N/N_0) = (\mu \cdot \rho \cdot D).$$

Da der Strahlweg D, bezogen auf einen vorgegebenen Behälter, eine berechenbare, konstante Große ist und da die Massendämpfungskonstante konstant ist, ist $-\ln(N/N_0)$ proportional zu $\rho$.

Um eine zuverlässige radiometrische Bestimmung der Dichte eines in einem Behälter befindlichen Mediums zu ermöglichen, wird eine Zweipunkt-Kalibrierung durchgeführt. Hierzu wird der Behälter in einem ersten Schritt mit einem ersten Medium mit bekannter Dichte $\rho 1$ befüllt. Das Medium wird mit Gammastrahlung durchstrahlt, und die entsprechende Zählrate N1 wird bestimmt. In einem zweiten Schritt wird der Behälter mit einem zweiten Medium mit bekannter Dichte $\rho 2$ befüllt, wobei sich die Dichte des zweiten Mediums von der Dichte des ersten Mediums -bevorzugt möglichst starkunterscheidet. Die Zählrate N2 wird bestimmt. Auf der Basis der ermittelten Messwerte (Zählraten) und der bekannten Größen ($\rho_1$, $\rho_2$) wird die Massendämpfungskonstante $\mu$ berechnet. Anhand der ermittelten Größen wird die Kalibrierkurve des radiometrischen Dichtemessgeräts ermittelt und in dem Dichtemessgerät abgespeichert.

Über das bekannte Verfahren lässt sich ein radiometrisches Dichtemessgerät individuell kalibrieren. Jedoch ist diese Zweipunkt-Kalibrierung mit hohem Aufwand verbunden. Oftmals haben die Behälter, Tanks, Silos oder Rohrleitungen, ein erhebliches Volumen, weshalb die zur Kalibrierung verwendete Medien in erheblichen Mengen zur Verfügung gestellt werden müssen. Während die Kalibrierung mit Wasser als Kalibriermedium für den oberen Dichtebereich noch relativ unproblematisch ist, ist die Befüllung mit dem zweiten Medium niedrigerer Dichte, z.B. Öl, oftmals nur noch unter großen Anstrengungen möglich. In diesem Zusammenhang sei auf Messstellen verwiesen, die sich z.B. in schwer zugänglichen Wüstenregionen befinden. Daher wird die Kalibrierkurve oftmals auf der Basis einer Messung der Zählrate bei nur einem Medium bestimmt (Einpunkt-Kalibrierung). Als zweiter Massedämpfungskoeffizient, der zur Berechnung der Kalibrierkurve notwendig ist, wird dann ein Standardwert von 7.7 mm²/g angenommen. Dieser Wert beruht auf Erfahrungswerten. Hierdurch wird zwar der Kalibrieraufwand halbiert, allerdings geschieht dies im Einzelfall auf Kosten der Messgenauigkeit des radiometrischen Dichtemessgeräts.

Doch selbst die bekannte Zweipunkt-Kalibrierung, also die Bestimmung des Massedämpfungskoeffizienten auf der Basis der Bestimmung der Dämpfung von Gammastrahlung bei Durchgang durch zwei Medien mit bekannter unterschiedlicher Dichte, ist nicht sehr zuverlässig, da der Einfluss der Dichte der beiden Medien auf den Massedämpfungskoeffizienten in vielen Anwendungsfällen deutlich geringer ist als der Einfluss der geometrischen Abmessungen des Behälters und der geometrischen Anordnung von Sende- und Empfangseinheit.

WO 97/29356 A1 zeigt eine Zweipunkt-Kalibrierung, die einmal mit leerem Behälter und einmal mit einem bekannten Medium befüllten Behälter durchgeführt wird.

DE 10 2017 130534 A1 zeigt eine Methode wie in der Präambel des Anspruchs 1. DE 10 2017 130534 A1 zeigt eine Einpunkt-Kalibrierung mit Messung eines Behälters mit einem bekannten Medium wobei der zweite Messpunkt durch eine Näherung bestimmt wird.

Der Erfindung liegt die Aufgabe zugrunde, eine einfache Methode zur präzisen Kalibrierung eines radiometrischen Dichtemessgeräts anzugeben.

Die Aufgabe wird gelöst durch ein Verfahren zum Kalibrieren einer radiometrischen Vorrichtung zur Bestimmung und/oder Überwachung der Dichte eines in einem Behälter befindlichen Mediums, wobei eine Sendeeinheit und eine Empfangseinheit vorgesehen sind, wobei die Sendeeinheit radioaktive Strahlung einer vorgegebenen Intensität aussendet und wobei die Empfangseinheit die von der Sendeeinheit ausgesendete radioaktive Strahlung nach Durchgang durch das Medium empfängt, und wobei eine Regel-/Auswerteeinheit vorgesehen ist, die anhand der von der Empfangseinheit gemessenen Intensität die Dichte des in dem Behälter befindlichen Mediums bestimmt, wobei das Verfahren die folgenden Verfahrensschritte aufweist:

- Bestimmen der Zählrate $N_0$ der radioaktiven Strahlung nach Durchgang durch den leeren Behälter (1) anhand der Aktivität der Sendeeinheit (3),
- Bestimmen der gemessenen Zählrate N der radioaktiven Strahlung nach Durchgang durch den Behälter (1), wenn sich in dem Behälter (1) ein Kalibriermedium mit bekannter Dichte befindet,
- Ermitteln des Massedämpfungskoeffizienten ($\mu$) gemäß der Formel $\mu = -(\ln(N/N_0))/(\rho_1 D)$, mit D: Strahlpfad der radioaktiven Strahlung oder Innendurchmesser des Behälters (1), $\rho_1$: Dichte des Kalibriermediums,
- Errechnen einer Kalibrierkurve, die die Abhängigkeit der Dichte des Mediums von der Zählrate der gemessenen Strahlungsintensität nach Durchgang durch den Behälter (1) wiedergibt,

wobei das Bestimmen der Zählrate $N_0$ anhand einer Berechnung der Dosisrate der Empfangseinheit bei leerem Behälter unter Verwendung der Aktivität der Sendeeinheit erfolgt.

Das erfindungsgemäße Verfahren schlägt somit zur Kalibrierung eines radiometrischen Dichtemessgeräts eine Einpunkt-Kalibrierung vor, für welche nur ein Messpunkt experimentell bestimmt wird: Die erste Zählrate $N_0$, die zur Bestimmung des Massdämpfungskoeffizienten erforderlich ist, wird mittels der Aktivität der Sendeeinheit ermittelt. Bei der Auslegung eines radiometrischen Dichtemessgeräts wird typischerweise zunächst eine Dosisrate der Empfangseinheit ausgewählt und daraufhin die benötigte Aktivität der Sendeeinheit berechnet, um die Sendeeinheit entsprechend auszuwählen. Die Berechnung der Aktivität der Sendeeinheit ist dem Fachmann aus der entsprechenden einschlägigen Literatur bekannt. Die Formel zur Berechnung der Aktivität der Sendeeinheit lässt sich umgekehrt für die Berechnung der Dosisrate des Detektors bei leerem Behälter einsetzen, woraus die Zählrate $N_0$ erhalten wird. Die Zählrate N der Gammastrahlung der verwendeten Sendeeinheit durch den mit einem Medium bekannter Dichte gefüllten Behälter wird experimentell ermittelt. Da somit die beiden Zählraten $N_0$ und N vorliegen, kann der Massedämpfungskoeffizient ohne Umwege berechnet und eine Kalibrierkurve anhand der beiden Zählraten sowie des Massedämpfungskoeffizienten ermittelt werden.

Eine experimentelle Ermittlung der Intensität der Strahlung ist oftmals bei leerem Behälter ausgeschlossen, da in diesem Fall eine massive Überstrahlung des Detektors erfolgen würde. Durch Vergleich mit experimentellen Messwerten, die über die Zweipunkt-Kalibrierung gewonnen wurden, hat sich gezeigt, dass die erfindungsgemäße Methode sehr gute Ergebnisse liefert.

In einer möglichen Weiterbildung des erfindungsgemäßen Verfahrens wird die Zählrate $N_0$ der radioaktiven Strahlung nach Durchgang durch den leeren Behälter bestimmt gemäß der Formel $N_0 = (P \cdot K \cdot B)/(F_a \cdot F_s)$, mit $F_a$: quadratischer Abstandsfaktor zwischen Sendeeinheit und Empfangseinheit, $F_s$: Dämpfungsfaktor, welcher zumindest von dem Isotop der Sendeeinheit und der Wandung des Behälters abhängt, P: Aktivität der Sendeeinheit, K: isotopenabhängiger Korrekturfaktor, B: Korrekturfaktor für die Umrechnung von der Dosisrate in die Zählrate $N_0$. Der Abstandsfaktor $F_a$ zwischen Sendeeinheit und Empfangseinheit kann ggf. ein mittlerer (quadratischer) Abstand sein, wenn die Sendeeinheit in einem Winkel zur Empfangseinheit angeordnet ist. Die geometrische Anordnung der radiometrischen Dichtemessvorrichung ist grundsätzlich zu berücksichtigen. Die Aktivität P der Sendeeinheit ist isotopenabhängig und bedarf der Korrektur durch den isotopenabhängigen Korrekturfaktor K. Der Dämpfungsfaktor $F_s$ berücksichtigt die Dämpfung der radioaktiven Strahlung bei Durchgang durch die Wandung des Behälters sowie weitere an der Wandung des Behälters angebrachten Schichten. Die Dämpfung der radioaktiven Strahlung durch die Luft innerhalb des leeren Behälters ist vernachlässigbar. Der Korrekturfaktor B hängt von der Art des Empfangseinheit ab und wird zur Umrechnung der Dosisrate $F_i$ in $N_0$ benötigt. Die Dosisrate $F_i$ ergibt sich aus $F_i = (P \cdot K)/(F_a \cdot F_s)$.

Bevorzugterweise wird als Kalibriermedium Wasser verwendet.

In einer weiteren Weiterbildung wird die Sendeeinheit und die Empfangseinheit so zueinander positioniert, dass der Behälter senkrecht zur Längsachse des Behälters, schräg zur Längsachse des Behälters oder parallel zur Längsachse des Behälters durchstrahlt wird. Üblicherweise handelt es sich bei dem Behälter um eine Rohrleitung oder einen Tank. Da Gammastrahlung auch durch Feststoffe transmittiert wird, werden die Sendeeinheit und die Empfangseinheit auf die Außenwand des Behälters aufgeschnallt. Die tatsächliche Anordnung wird in Abhängigkeit vom jeweiligen Anwendungsfall gewählt.

In einer weiteren möglichen Weiterbildung wird als Behälter eine Rohrleitung verwendet, wobei die Sendeeinheit und die Empfangseinheit an gegenüberliegenden Oberflächenbereichen der Rohrleitung befestigt werden.

Vorteilhafterweise wird die Empfangseinheit so ausgestaltet und positioniert, dass die sensitiven Komponenten der Empfangseinheit von der Strahlung getroffen werden. Um optimale Messergebnisse zu erhalten, ist die Empfangseinheit bezüglich der Sendeeinheit/der Sendeeinheiten so ausgestaltet und positioniert, dass die sensitiven Komponenten der Empfangseinheit von der durch den Behälter gehenden Strahlung getroffen werden.

Eine weitere Weiterbildung sieht vor, dass der Dämpfungsfaktor $F_s$ berechnet wird gemäß der Formel $F_s = e^{aq}$ mit a: isotopenabhängiger Dämpfungskoeffizient, q: Dicke der Wandung des Behälters gemessen in Stahl-Äquivalenten, wobei ein Stahl-Äquivalent definiert ist als eine Dichte der Wandung des Behälters relativ zu einer Dichte von Stahl. Bei der Betrachtung des leeren Behälters wird die Intensität der ausgesendeten radioaktiven Strahlung vorwiegend durch die Wandung des Behälters abgeschwächt. Auch Isolationsschichten zum Blocken der Gammastrahlung oder weitere Schichten, welche zwischen der Sendeeinheit und der Empfangseinheit am Behälter angebracht sind, müssen ggf. berücksichtigt werden, da diese die Intensität der ausgesendeten radioaktive Strahlung ebenfalls reduzieren.

Die Intensität der Gammastrahlung nimmt exponentiell mit der Eindringtiefe in das durchstrahlte Medium ab. Die Halbwertsdicke kennzeichnet die von der Gammastrahlung durchstrahlte Strecke in dem Material/Medium, bei der sich die Intensität der Gammastrahlung infolge der Wechselwirkung (im Wesentlichen der Compton-Streuung) mit dem Material/dem Medium halbiert hat. Die Halbwertsdicke hängt ab von der Wellenlänge der Gammastrahlung und von der Ordnungszahl des durchstrahlten Materials/Mediums ab. Für Stahl beispielsweise ist die Halbwertsdicke bekannt und liegt bei etwa 14 mm Dicke des Stahls. Folglich kann aus der tatsächlichen Dicke einer Stahlwand des Behälters die entsprechende Dämpfung der radioaktiven Strahlung berechnet werden. Hat die Wandung des Behälters eine andere Dichte ($\rho_{Wandung}$) als Stahl ($\rho_{Stahl}$), so muss die diese entsprechend umgerechnet werden. Für die Berechnung von q kann folgende Formel verwendet werden: $q = (2 \cdot L \cdot \rho_{Wandung})/\rho_{Stahl}$, wobei L die Dicke der Wandung des Behälters ist. Ggf. sind an der Wandung des Behälters weitere Schichten angebracht welche ebenfalls die radioaktive Strahlung dämpfen. Allgemein können Schichten i als zusätzliche Summanden in den Zähler der Formel eingebracht werden, so dass gilt $q = (\Sigma_i 2 \cdot L \cdot \rho_i)/\rho_{Stahl}$. Der Faktor 2 berücksichtigt, dass die radioaktive Strahlung die Wandung des Behälters zweimal durchstrahlt und kann ggf. entfallen. Der Dämpfungskoeffizient a ist auf die Dämpfung durch Stahl und die jeweilige Gammaquelle angepasst.

Die Erfindung wird anhand der nachfolgenden Figuren Fig. 1-2 näher erläutert. Sie zeigen:

Fig. 1: eine schematische Darstellung einer Anordnung zur radiometrischen Bestimmung der Dichte eines Mediums.

Fig. 2: eine schematische Darstellung eines Graphen, der die Abhängigkeit der Zählrate von der Dichte visualisiert.

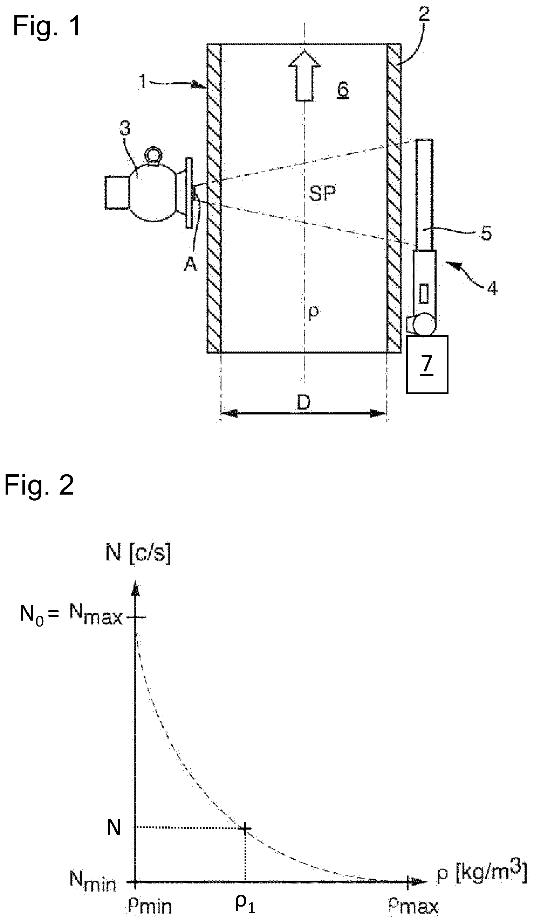

Fig. 1 zeigt eine schematische Darstellung einer Anordnung zur radiometrischen Bestimmung der Dichte eines Mediums 6, das sich in einem Behälter 1, hier einer Rohrleitung mit einer Wandung 2, befindet. Auf gegenüberliegenden Oberflächenbereichen der Rohrleitung 1 sind die Sendeeinheit 3 mit der Gammaquelle und die Empfangseinheit 4 angeordnet. Beide Komponenten 3, 4 sind über einen in der Fig. 1 nicht gesondert dargestellten Klemmmechanismus von außen an der Rohrleitung 1 befestigt.

Die Kapselung der Gammaquelle durch das umgebende Gehäuse ist so ausgestaltet, dass die Gammastrahlung nur im Bereich der Austrittsfläche A aus der Sendeeinheit 3 austritt. Die Gammastrahlung durchstrahlt den Behälter 1 mit dem darin befindlichen Medium 6, dessen Dichte p bestimmt werden soll, auf dem gekennzeichneten Strahlpfad SP. Die durch Wechselwirkung mit der Behälterwand und/oder dem Medium 6 geschwächte Gammastrahlung wird von der Empfangseinheit 4 empfangen. Anhand der Intensität bzw. anhand der Zählrate der Empfangseinheit 4 bestimmt die Auswerteeinheit 7 die Dichte des in dem Behälter 1 befindlichen Mediums 6. Entsprechende radiometrische Dichte-Messanordnungen werden von der Anmelderin angeboten und vertrieben. Wie bereits an vorhergehender Stelle erwähnt, kann die Anordnung von Sendeeinheit 3 und Empfangseinheit 4 bezüglich des Behälters 1 unterschiedlich ausgestaltet sein.

Fig. 2 zeigt eine schematische Darstellung eines Graphen, der die Abhängigkeit der Zählrate N in Abhängigkeit von der Dichte p des Mediums 6 visualisiert. Die Dämpfung der Gammastrahlung auf dem Strahlpfad SP durch ein Medium 6 lässt sich über das Lambert-Beersche Gesetz beschreiben - folgt also einer e-Funktion. Die Dämpfung F entspricht dem Verhältnis von Zählrate der Gammastrahlung nach Durchgang durch das Medium 6 zur Zählrate $N_0$ der von der Gammaquelle durch die Austrittsöffnung A ausgesandten Gammastrahlung. Die Zählrate N wird angegeben in Counts (Zahl der Ereignisse) pro Sekunde (c/sec).

In Fig. 2 ist die Zählrate über die Dichte aufgetragen. Bei maximaler Dichte $\rho_{max}$ des Mediums 6 ist die Zählrate $N_{min}$ näherungsweise Null, bei minimaler Dichte $\rho_{min}$ ist die Zählrate $N_{max}$ im Wesentlichen gleich der Zählrate $N_0$ der Gammastrahlung, die von der Gammaquelle ausgesendet wird. Es gilt der folgende mathematische Zusammenhang:

$$\frac{N_{min}}{N_{max}} = e^{-\mu \cdot D \cdot (\rho_{max} + \rho_{min})}$$

Da die Zählrate $N_0$ erfindungsgemäß anhand der Aktivität der Sendeeinheit 3 bestimmt wird, muss lediglich eine weitere Zählrate N eines Mediums 6 mit einer definierten Dichte $\rho_1$ bestimmt werden. Anschließend lässt sich der Massedämpfungskoeffizient $\mu$ bestimmen und die in Fig. 2 gezeigte beispielhafte Kalibrierkurve berechnen.

Um die Berechnung der Zählrate $N_0$ zu veran-schaulichen, soll im Folgenden ein Beispiel für eine Berechnung gezeigt werden. Beispielhaft wird eine Sendeeinheit 3 mit einer Cs137-Gammaquelle eingesetzt, welche einen Korrekturfaktor K von 95,95 $\mu$Sv·m²/(h·GBq), eine Aktivität P von 0,13 GBq und einen isotopenabhängigen Dämpfungskoeffizienten a von 0,048 aufweist. Die Empfangseinheit 4 weist einen Korrekturfaktor B von 1350 h/(s·$\mu$Sv) auf.

Für eine Wandung 2 des Behälters 1 aus Stahl mit einer Dicke von 9,3 mm und einer Dichte von Stahl von 7890 kg/m³ ergibt sich ein Dämpfungsfaktor $F_s = e^{aq}$ = 2,4. Der Abstand zwischen Sendeeinheit 3 und Empfangseinheit 4 beträgt 0,45 m, woraus sich ein Abstandsfaktor $F_a = (0,45m)^2 = 0,2m^2$ ergibt. Daraus errechnet sich eine Dosisrate $F_i$ von 25,5 $\mu$Sv/h und damit eine Zählrate $N_0$ von 34479 1/s.

## Bezugszeichenliste

| 1 | Behälter |
|---|---|
| 2 | Wandung des Behälters |
| 3 | Sendeeinheit mit Gammaquelle |
| 4 | Empfangseinheit |
| 5 | sensitive Komponente |
| 6 | Medium |
| 7 | Auswerteeinheit |
| D | Innendurchmesser des Behälters |
| A | Austrittsfläche der Gammastrahlung |
| SP | Strahlpfad |

## Patentansprüche

1. Verfahren zum Kalibrieren einer radiometrischen Vorrichtung zur Bestimmung und/oder Überwachung der Dichte eines in einem Behälter (1) befindlichen Mediums (6), wobei eine Sendeeinheit (3) und eine Empfangseinheit (4) vorgesehen sind, wobei die Sendeeinheit (3) radioaktive Strahlung einer vorgegebenen Intensität aussendet und wobei die Empfangseinheit (4) die von der Sendeeinheit (3) ausgesendete radioaktive Strahlung nach Durchgang durch das Medium (6) empfängt, und wobei eine Regel-/Auswerteeinheit (7) vorgesehen ist, die anhand der von der Empfangseinheit (4) gemessenen Intensität die Dichte des in dem Behälter (1) befindlichen Mediums (6) bestimmt, wobei das Verfahren die folgenden Verfahrensschritte aufweist:

   • Bestimmen der Zählrate $N_0$ der radioaktiven Strahlung nach Durchgang durch den leeren Behälter (1) anhand der Aktivität der Sendeeinheit (3),
   • Bestimmen der gemessenen Zählrate N der radioaktiven Strahlung nach Durchgang durch den Behälter (1), wenn sich in dem Behälter (1) ein Kalibriermedium mit bekannter Dichte befindet,

• Ermitteln des Massedämpfungskoeffizienten ($\mu$) gemäß der Formel $\mu = -(\ln(N/N_0))/(\rho_1 D)$, mit D: Strahlpfad der radioaktiven Strahlung oder Innendurchmesser des Behälters (1), $\rho_1$: Dichte des Kalibriermediums,

• Errechnen einer Kalibrierkurve, die die Abhängigkeit der Dichte des Mediums von der Zählrate der gemessenen Strahlungsintensität nach Durchgang durch den Behälter (1) wiedergibt,

**dadurch gekennzeichnet, dass** das Bestimmen der Zählrate N0 anhand einer Berechnung der Dosisrate der Empfangseinheit bei leerem Behälter unter Verwendung der Aktivität der Sendeeinheit erfolgt.

2. Verfahren nach nach Anspruch 1,
wobei die Zählrate $N_0$ der radioaktiven Strahlung nach Durchgang durch den leeren Behälter (1) bestimmt wird gemäß der Formel $N_0 = (P \cdot K \cdot B)/(F_a \cdot F_s)$, mit $F_a$: quadratischer Abstandsfaktor zwischen Sendeeinheit (3) und Empfangseinheit (4), $F_s$: Dämpfungsfaktor, welcher zumindest von der Wandung (2) des Behälters (1) und dem Isotop der Sendeeinheit (3) abhängt, P: Aktivität der Sendeeinheit (3), K: isotopenabhängiger Korrekturfaktor, B: Korrekturfaktor für die Umrechnung von der Impulsrate in die Zählrate $N_0$.

3. Verfahren nach Anspruch 1 oder 2,
wobei als Kalibriermedium Wasser verwendet wird.

4. Verfahren nach Anspruch 1, 2 oder 3,
wobei die Sendeeinheit (3) und die Empfangseinheit (4) so zueinander positioniert wird, dass der Behälter (1) senkrecht zur Längsachse des Behälters (1), schräg zur Längsachse des Behälters (1) oder parallel zur Längsachse des Behälters (1) durchstrahlt wird.

5. Verfahren nach zumindest einem der vorhergehenden Ansprüche,
wobei als Behälter (1) eine Rohrleitung verwendet wird, und wobei die Sendeeinheit (3) und die Empfangseinheit (4) an gegenüberliegenden Oberflächenbereichen der Rohrleitung befestigt werden.

6. Verfahren nach Anspruch 4 oder 5,
wobei die Empfangseinheit (4) so ausgestaltet und positioniert wird, dass die sensiven Komponenten (5) der Empfangseinheit (4) von der Strahlung getroffen werden.

7. Verfahren nach mindestens einem der vorherigen Ansprüche,

wobei der Dämpfungsfaktor $F_s$ berechnet wird gemäß der Formel $F_s = e^{a \cdot q}$ mit a: isotopenabhängiger Dämpfungskoeffizient, q: Dicke der Wandung (2) des Behälters (1) gemessen in Stahl-Äquivalenten, wobei ein Stahl-Äquivalent definiert ist als eine Dichte der Wandung (2) des Behälters (1) relativ zu einer Dichte von Stahl.

**Claims**

1. A method for calibrating a radiometric device for determining and/or monitoring the density of a medium (6) located in a container (1), wherein a transmitter unit (3) and a receiver unit (4) are provided, wherein the transmitter unit (3) emits radioactive radiation of a specified intensity and wherein the receiver unit (4) receives the radioactive radiation emitted by the transmitter unit (3) once it has passed through the medium (6), and wherein a control/evaluation unit (7) is provided, which determines the density of the medium (6) located in the container (1) based on the intensity measured by the receiver unit (4), wherein the method has the following process steps:

• Determining the count rate $N_0$ of the radioactive radiation once it has passed through the empty container (1) based on the activity of the transmitter unit (3),
• Determining the measured count rate N of the radioactive radiation once it has passed through the container (1), if a calibration medium with a known density is located in the container (1),
• Determining the mass damping coefficient ($\mu$) according to the formula $\mu = -(\ln(N/N_0))/(p_1 D)$, where D: Radiation path of the radioactive radiation or internal diameter of the container (1), $p_1$: Density of the calibration medium,
• Calculating a calibration curve which reflects the dependency of the density of the medium on the count rate of the measured radiation intensity once it has passed through the container (1), **characterized in that** the count rate $N_0$ is determined based on a calculation of the dose rate of the receiver unit when the container is empty using the activity of the transmitter unit.

2. The method as claimed in claim 1,
wherein the count rate N0 of the radioactive radiation once it has passed through the empty container (1) is determined according to the formula $N_0 = (P \cdot K \cdot B)/(F_a \cdot F_s)$, where $F_a$: Quadratic distance factor between transmitter unit (3) and receiver unit (4), $F_s$: Damping factor, which depends at least on the wall (2) of the container (1) and the isotope of the transmitter unit (3), P: Activity of the transmitter unit (3), K: Isotope-dependent correction factor, B: Correction factor for converting the pulse rate into the count rate N0.

**3.** The method as claimed in claim 1 or 2,
wherein water is used as the calibration medium.

**4.** The method as claimed in claim 1, 2 or 3,
wherein the transmitter unit (3) and the receiver unit (4) are positioned relative to one another in such a way that radiation passes through the container (1) perpendicular to the longitudinal axis of the container (1), at an angle to the longitudinal axis of the container (1) or parallel to the longitudinal axis of the container (1).

**5.** The method as claimed in at least one of the preceding claims, wherein a pipe is used as a container (1), and wherein the transmitter unit (3) and the receiver unit (4) are attached on opposite surface areas of the pipe.

**6.** The method as claimed in claim 4 or 5,
wherein the receiver unit (4) is designed and positioned in such a way that the delicate components (5) of the receiver unit (4) are hit by the radiation.

**7.** The method as claimed in at least one of the preceding claims,
wherein the damping factor $F_s$ is calculated according to the formula $F_s = e^{a \cdot q}$ where a: Isotope-dependent damping coefficient, q: Thickness of the wall (2) of the container (1) measured in steel equivalents, wherein a steel equivalent is defined as a density of the wall (2) of the container (1) relative to a density of steel.

**Revendications**

**1.** Procédé relatif à l'étalonnage d'un dispositif radiométrique destiné à la détermination et/ou à la surveillance de la densité d'un produit (6) se trouvant dans un réservoir (1), une unité d'émission (3) et une unité de réception (4) étant prévues, l'unité d'émission (3) émettant un rayonnement radioactif d'une intensité prédéfinie et l'unité de réception (4) recevant le rayonnement radioactif émis par l'unité d'émission (3) après son passage à travers le produit (6), et une unité de régulation/d'évaluation (7) étant prévue, laquelle unité détermine la densité du produit (6) se trouvant dans le réservoir (1) à l'aide de l'intensité mesurée par l'unité de réception (4), lequel procédé comprend les étapes suivantes :

• Détermination du taux de comptage $N_0$ du rayonnement radioactif après son passage à travers le réservoir (1) vide à l'aide de l'activité de l'unité d'émission (3),
• Détermination du taux de comptage mesuré $N$ du rayonnement radioactif après son passage à travers le réservoir (1) lorsqu'un produit d'étalonnage de densité connue se trouve dans le réservoir (1),
• Détermination du coefficient d'atténuation de masse ($\mu$) selon la formule $\mu = -(\ln(N/N_0))/(\rho_1 D)$ avec D : chemin du faisceau de rayonnement radioactif ou diamètre intérieur du réservoir (1), $\rho_1$ : densité du produit d'étalonnage,
• Calcul d'une courbe d'étalonnage qui représente la dépendance de la densité du produit par rapport au taux de comptage de l'intensité de rayonnement mesurée après passage à travers le réservoir (1),

**caractérisé en ce que** la détermination du taux de comptage $N_0$ est effectuée à partir d'un calcul du taux de dose de l'unité de réception lorsque le réservoir est vide, en utilisant l'activité de l'unité d'émission.

**2.** Procédé selon la revendication 1,
pour lequel le taux de comptage $N_0$ du rayonnement radioactif après passage à travers le réservoir (1) vide est déterminé selon la formule $N_0 = (P \cdot K \cdot B) / (F_a \cdot F_s)$, avec $F_a$ : facteur de distance quadratique entre l'unité d'émission (3) et l'unité de réception (4), $F_s$ : facteur d'atténuation qui dépend au moins de la paroi (2) du réservoir (1) et de l'isotope de l'unité d'émission (3), P : activité de l'unité d'émission (3), K : facteur de correction dépendant de l'isotope, B : facteur de correction pour la conversion du taux d'impulsions en taux de comptage $N_0$.

**3.** Procédé selon la revendication 1 ou 2,
pour lequel on utilise de l'eau comme produit d'étalonnage.

**4.** Procédé selon la revendication 1, 2 ou 3,
pour lequel l'unité d'émission (3) et l'unité de réception (4) sont positionnées l'une par rapport à l'autre de telle sorte que le réservoir (1) est traversé par un rayonnement perpendiculaire à l'axe longitudinal du réservoir (1), oblique par rapport à l'axe longitudinal du réservoir (1) ou parallèle à l'axe longitudinal du réservoir (1).

**5.** Procédé selon au moins l'une des revendications précédentes,

pour lequel on utilise comme réservoir (1) une conduite, et
pour lequel l'unité d'émission (3) et l'unité de réception (4) sont fixées sur des zones de surface opposées de la conduite.

**6.** Procédé selon la revendication 4 ou 5,
pour lequel l'unité de réception (4) est conçue et positionnée de manière à ce que les composants sensibles (5) de l'unité de réception (4) soient touchés par le rayonnement.

7. Procédé selon au moins l'une des revendications précédentes,
pour lequel le facteur d'atténuation $F_s$ est calculé selon la formule $F_s = e^{a \cdot q}$ avec a : coefficient d'atténuation dépendant de l'isotope, q : épaisseur de la paroi (2) du réservoir (1) mesurée en équivalent acier, un équivalent acier étant défini comme une densité de la paroi (2) du réservoir (1) par rapport à une densité d'acier.

## Fig. 1

## Fig. 2

EP 4 067 863 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9729356 A1

- DE 102017130534 A1